# EUROPEAN PATENT APPLICATION

(11) **EP 4 697 085 A1**
(43) Date of publication of application: **18.02.2026**
(21) Application number: 24788849.8
(22) Date of filing: 12.04.2024
(51) Int. Cl.: G02C 7/06, G02B 1/14, G02C 7/02

(54) **SPECTACLE LENS, SPECTACLES, AND METHOD FOR MANUFACTURING SPECTACLE LENS**

(30) Priority: 13.04.2023 JP 2023065382
(71) Applicant: Hoya Lens Thailand Ltd., Pathumthani 12130 (TH)
(72) Inventor: MATSUOKA, Shohei, Tokyo 160-8347 (JP); KONO, Shigetoshi, Tokyo 160-8347 (JP)
(74) Representative: Hoffmann Eitle
(86) International application number: PCT/JP2024/014873
(87) International publication number: WO 2024/214827

(57) **Abstract**

Provided are a spectacle lens and related technology thereof. The spectacle lens includes a functional region having a base region and a defocus region and achieves a myopia progression suppressing effect. The spectacle lens includes a lens substrate and a hard coat film. A direction indicating portion that indicates a direction of the spectacle lens when worn is provided, and defocus power of convex regions tends to increase from an upper side to a lower side of the spectacle lens when worn.

## Description

### [Technical Field]

The present invention relates to a spectacle lens, spectacles, and a method for producing a spectacle lens.

### [Background Art]

PTL 1 describes a spectacle lens that suppresses the progression of anomalies of refraction such as myopia. Specifically, for example, spherical minute convex portions (substrate protrusions in this specification) each having a diameter of approximately 1 mm are formed on the convex surface, which corresponds to the object-side surface of the spectacle lens. In a spectacle lens, a light flux incident from the object-side surface is usually emitted from the eye-side surface and focused on the retina of the wearer. On the other hand, a light flux that has passed through the minute convex portions described above is focused at a position closer to the object side (front side) than the retina of the wearer. As a result, the progression of myopia is suppressed. In this specification, a spectacle lens of this type is also referred to as a "myopia progression suppressing lens."

PTL 2 describes a spectacle lens that is capable of suppressing the progression of myopia, which is produced using a dip method in which the lowermost end of the lens substrate is immersed first in a hard coat liquid, and the uppermost end thereof is immersed last, so that the entire lens substrate is immersed in the liquid. During lifting, the lens substrate is lifted upward in the vertical direction in the reverse order ([0050] in PTL 2).

### [Citation List]

### [Patent Literature]

[PTL 1] U.S. Patent Application Publication No. 2017/0131567
[PTL 2] WO 2021/131825

### [Summary of Invention]

### [Technical Problem]

The lower portion of a spectacle lens when worn is often used for near vision such as reading, while the upper side of the spectacle lens is often used for distance vision such as viewing a landscape.

When a parallel light flux is incident on the pupil from a sufficiently far distance, the convex regions of the spectacle lens exert refractive power according to their shapes. On the other hand, when divergent light is incident on the pupil from a position near the wearer of the spectacle lens, the convex regions of the spectacle lens exert only low refractive power.

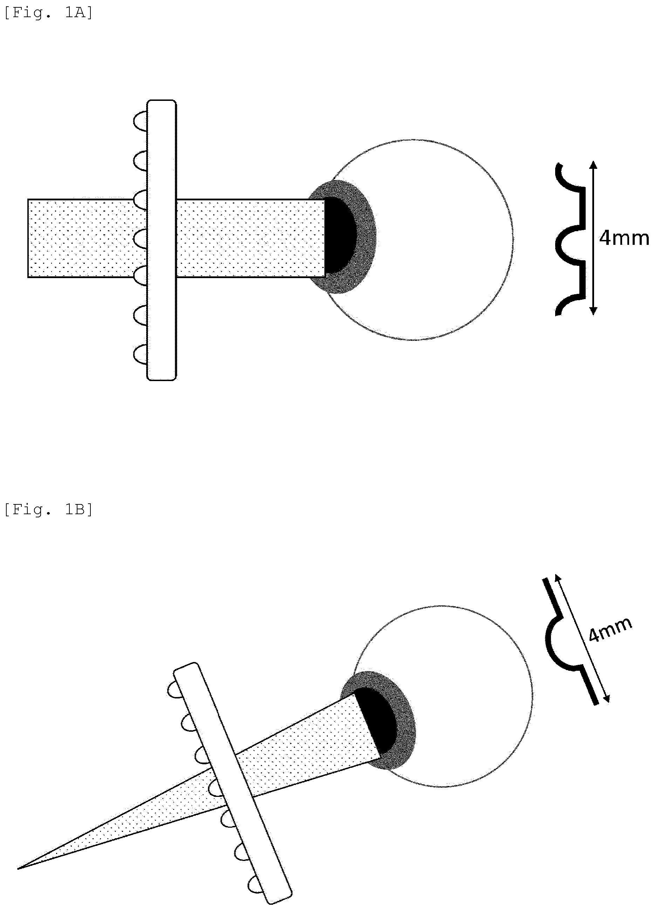

Fig. 1A is an explanatory view showing the state of a spherical wave (φ 4, i.e., within a pupil diameter of 4.0 mm, located behind the eye) when a parallel light flux from a sufficiently far distance passes through a myopia progression suppressing lens and is incident on the pupil.

Fig. 1B is an explanatory view showing the state of a spherical wave (φ 4, i.e., within a pupil diameter of 4.0 mm, located behind the eye) when divergent light from a position near the wearer of a myopia progression suppressing lens passes through the myopia progression suppressing lens and is incident on the pupil.

In Fig. 1A, a spherical wave is generated corresponding to each minute convex portion (convex region in the present application). On the other hand, in Fig. 1B, divergent light that has passed through each convex region is incident on the pupil from the oblique lower side to the oblique upper side. As a result, compared to each spherical wave in Fig. 1A, one spherical wave appears extended in the vertical direction of the figure. This extended ratio becomes approximately (1 + L/T), where the corneal vertex distance is represented by L [mm] and the distance from the lens to the object during near vision is represented by T [mm]. Naturally, the retina receives the spherical wave corresponding to each convex region. However, during near vision using the myopia progression suppressing lens, this reception does not occur, resulting in only low refractive power. Specifically, the apparent power decreases in reverse proportion to the square of the extended ratio, that is, the apparent power becomes 1/(1 + L/S)^2 of the original apparent power. For example, when L = 12 mm and T = 300 mm, the extended ratio becomes 1.04 and the apparent power becomes 1/1.08 of the original power. This phenomenon may be referred to as "a decrease in apparent power." Furthermore, this phenomenon occurs because the refractive effect is determined by (the incident height on the lens × the refractive power), and in the case of incident divergent light, the height of incidence on the spectacles at a position in front of the pupil becomes relatively lower.

In view of this, it is considered as one approach to increase in advance the defocus power of each convex region located at the position through which the line of sight passes when the myopia progression suppressing lens is viewed for near vision. In the foregoing case, if the defocus power is increased by a factor of (1 + L/S)^2, the apparent power during near vision becomes approximately equal to the original power. However, considering that the lower portion of the lens is not always used for near vision and is used for distance vision during walking or the like, it is more balanced for both cases to increase the defocus power by a factor of (1 + L/S), which represents an intermediate value between 1 time and a factor of (1 + L/S)^2. In the foregoing case, it is preferable to increase the defocus power by a factor of 1.04.

In a myopia progression suppressing lens of the type described in PTL 1, a multiplicity of convex regions are provided on the surface of the spectacle lens. Therefore, as a specific producing method, it is reasonable in terms of production efficiency to obtain a lens substrate having a multiplicity of protrusions by injection molding, form a hard coat film or the like on the protrusions, and form convex regions on the surface of the spectacle lens in conformity with the shapes of the protrusions. In this specification, the term convex region is used for a spectacle lens after a hard coat film or the like has been formed, while the term substrate protrusion is used for the lens substrate.

Injection molding requires a die. Further, in response to a decrease in apparent power during near vision, it is necessary to make the shape of each substrate protrusion (lens substrate) at the position for near vision different from the shapes of other substrate protrusions in the die in order to increase in advance the defocus power of each convex region located at the position through which the line of sight passes when the myopia progression suppressing lens is viewed for near vision. Such a change in die design requires significant cost and time.

In addition, the primary wearers of the myopia progression suppressing lenses are children. Children exhibit greater variability in distance (near distance) in near vision than adults, even during the same activity such as reading, due to differences in age and/or physique. In other words, a change in die design in accordance with each child requires more significant cost and time.

One embodiment according to a spectacle lens or spectacles of the present invention aims to suppress a decrease in apparent power during near vision for each wearer.

One embodiment according to content other than the spectacle lens and spectacles of the present invention aims to suppress a decrease in apparent power during near vision for each wearer, while reducing the consumption of cost and time.

### [Solution to Problem]

In order to solve the above problems, the present inventor has conducted extensive studies. As a result, it has been found that a decrease in apparent power during near vision is suppressed not by determining the defocus power of the spectacle lens through a die, but by means of factors applied after the production of the lens substrate, specifically through a hard coat film.

The present inventor has conducted extensive studies on the specific method. As a result, when employing the dip method, the present inventor has found that the defocus power of the convex regions arranged on the upper side tends to be higher than that of the convex regions arranged on the lower side during immersion in the hard coat liquid, as will be described in the section of the embodiment given later.

The present inventor has found that the spectacle lens or the spectacles as an article produced in this manner has the same tendency.

The following aspect is an example of a producing method to which this finding has been applied. In other words, it has been found that, although the lens substrate is normally immersed in the hard coat liquid with its upper side facing upward and its lower side facing downward, immersion is performed with the upper and lower sides inverted. On the basis of this finding, the following aspects have been created.

A first aspect of the present invention provides a spectacle lens that achieves a myopia progression suppressing effect and includes a functional region having
a base region that causes a light flux incident from an object-side surface to be emitted from an eye-side surface, enter a wearer's pupil, and be focused on a retina to achieve wearer's prescription power, and
a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region,
the spectacle lens including:
   a lens substrate having a substrate base portion and a plurality of substrate protrusions protruding from the substrate base portion on a surface thereof; and
   a hard coat film that forms the base region so as to cover the substrate base portion and forms the defocus region so as to cover the plurality of substrate protrusions by covering the lens substrate including the plurality of substrate protrusions,
   wherein
   a direction indicating portion that indicates a direction of the spectacle lens when worn is provided, and
   defocus power of the convex regions tends to increase from an upper side to a lower side of the spectacle lens when worn.

A second aspect of the present invention provides the spectacle lens according to the first aspect, wherein
the spectacle lens is an uncut lens before lens shaping.

A third aspect of the present invention provides the spectacle lens according to any one of the first and second aspects, wherein
defocus power of 80% or more of the convex regions in the spectacle lens is in a range of 3.0 to 5.0 D.

A fourth aspect of the present invention provides the spectacle lens according to any one of the first to third aspects, wherein
defocus power of 80% or more of the substrate protrusions in the lens substrate falls within a range of ± 0.12 D.

A fifth aspect of the present invention provides the spectacle lens according to the fourth aspect, wherein
defocus power of the convex regions approaches the defocus power of the substrate protrusions underlying the convex regions from the upper side to the lower side of the spectacle lens when worn.

A sixth aspect of the present invention provides the spectacle lens according to any one of the first to fifth aspects, further including:
a central clear region that is surrounded by the functional region and includes an eye point, wherein
the central clear region causes a light flux incident from the object-side surface to be emitted from the eye-side surface, enter the wearer's pupil, and be focused on the retina to achieve the wearer's prescription power.

A seventh aspect of the present invention provides the spectacle lens according to any one of the first to sixth aspects, further including:
an outer clear region that serves as an annular region surrounding the functional region on an outer edge side of the spectacle lens, wherein
the outer clear region causes a light flux incident from the object-side surface to be emitted from the eye-side surface, enter the wearer's pupil, and be focused on the retina to achieve the wearer's prescription power.

An eighth aspect of the present invention provides the spectacle lens according to any one of the first to seventh aspects, further including:
a central clear region that is surrounded by the functional region and includes an eye point, the central clear region causing a light flux incident from the object-side surface to be emitted from the eye-side surface, enter the wearer's pupil, and be focused on the retina to achieve the wearer's prescription power;
an outer clear region that serves as an annular region surrounding the functional region on an outer edge side of the spectacle lens, the outer clear region causing a light flux incident from the object-side surface to be emitted from the eye-side surface, enter the wearer's pupil, and be focused on the retina to achieve the wearer's prescription power,
wherein
a difference in average film thickness of the hard coat film between the central clear region and the outer clear region is within 10%.

A ninth aspect of the present invention provides spectacles in which a spectacle lens is mounted in a frame, the spectacle lens achieving a myopia progression suppressing effect and including a functional region having
a base region that causes a light flux incident from an object-side surface to be emitted from an eye-side surface, enter a wearer's pupil, and be focused on a retina to achieve wearer's prescription power, and
a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region,
the spectacle lens including:
   a lens substrate having a substrate base portion and a plurality of substrate protrusions protruding from the substrate base portion on a surface thereof; and
   a hard coat film that forms the base region so as to cover the substrate base portion and forms the defocus region so as to cover the plurality of substrate protrusions by covering the lens substrate including the plurality of substrate protrusions,
   wherein
   defocus power of the convex regions tends to increase from an upper side to a lower side of the spectacle lens when worn.

A tenth aspect of the present invention provides a method for producing a spectacle lens that achieves a myopia progression suppressing effect and includes a functional region having
a base region that causes a light flux incident from an object-side surface to be emitted from an eye-side surface, enter a wearer's pupil, and be focused on a retina to achieve wearer's prescription power, and
a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region,
the method including:
   an immersion step of immersing a lens substrate in a hard coat liquid, the lens substrate having a substrate base portion and a plurality of substrate protrusions protruding from the substrate base portion on a surface thereof;
   a lifting step of lifting the lens substrate from the hard coat liquid; and
   a drying step of obtaining a hard coat film that forms the base region so as to cover the substrate base portion and forms the defocus region so as to cover the plurality of substrate protrusions by covering the lens substrate including the plurality of substrate protrusions,
   wherein
      (1) the lens substrate of the spectacle lens when worn is immersed in the hard coat liquid from an upper side thereof prior to the immersion step, in a case in which the lens substrate includes a direction indicating portion that indicates a direction of the spectacle lens when worn, and
      (2) a direction indicating portion setting step is performed prior to the immersion step, in which, in a case in which the lens substrate does not include the direction indicating portion that indicates the direction of the spectacle lens when worn, a side of the lens substrate that first comes into contact with the hard coat liquid is set as the upper side of the lens substrate, an opposite side is set as a lower side thereof, and the direction indicating portion that indicates the direction of the spectacle lens when worn is provided on the lens substrate or the spectacle lens in accordance with the setting.

An eleventh aspect of the present invention provides the method for producing the spectacle lens according to the tenth aspect, wherein,
in the lifting step, a lifting speed of the lens substrate is within a variation width of ± 10% from a start to an end of lifting.

When the defocus power of the convex regions increases from the upper side to the lower side of the spectacle lens, the lower limit of the increase ratio (the ratio (%) of the difference between the maximum and minimum values to the minimum value of the defocus power of the convex regions on the vertical line passing through the lens center) may be a value between 1 and 3%, and the upper limit thereof may be a value between 4 and 12%.

The defocus power of the convex regions is preferably 3.0 to 5.0 D. Therefore, when the defocus power of the convex regions increases from the upper side to the lower side of the spectacle lens, the lower limit of the increase amount (the difference between the maximum and minimum values of the defocus power of the convex regions on the vertical line passing through the lens center) may be a value between 0.03 and 0.10 D, and the upper limit thereof may be a value between 0.12 and 0.60 D.

### [Advantageous Effects of Invention]

One embodiment according to a spectacle lens or spectacles of the present invention can suppress a decrease in apparent power during near vision for each wearer.

One embodiment according to content other than the spectacle lens and spectacles of the present invention can suppress a decrease in apparent power during near vision for each wearer, while reducing the consumption of cost and time.

### [Brief Description of Drawings]

[Fig. 1A]
   Fig. 1A is an explanatory view showing the state of a spherical wave when a parallel light flux from a sufficiently far distance passes through a myopia progression suppressing lens and is incident on the pupil.
[Fig. 1B]
   Fig. 1B is an explanatory view showing the state of a spherical wave when divergent light from a position near the wearer of a myopia progression suppressing lens passes through the myopia progression suppressing lens and is incident on the pupil.
[Fig. 2]

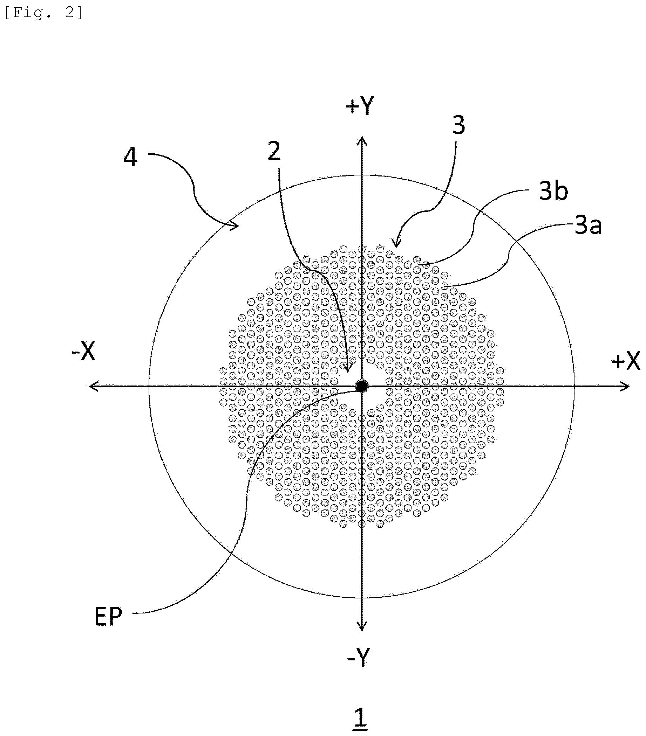

   Fig. 2 is a schematic plan view of a spectacle lens according to one aspect of the present invention.
[Fig. 3]

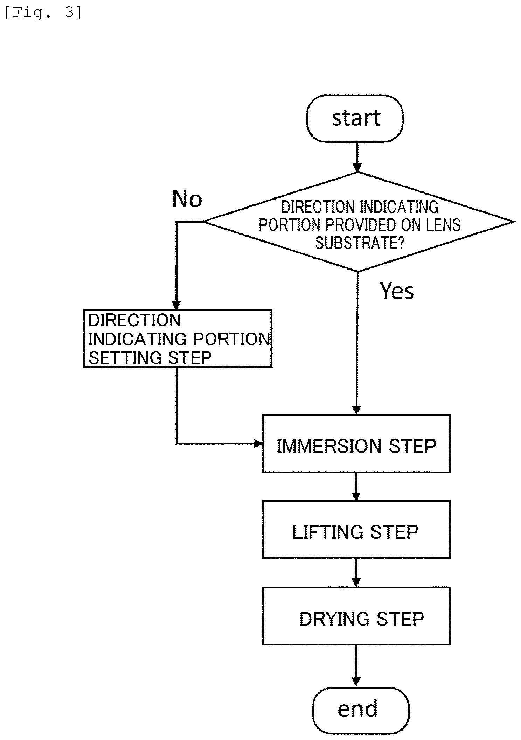

   Fig. 3 is a schematic flow diagram of a method for producing the spectacle lens according to one aspect of the present invention.
[Fig. 4]

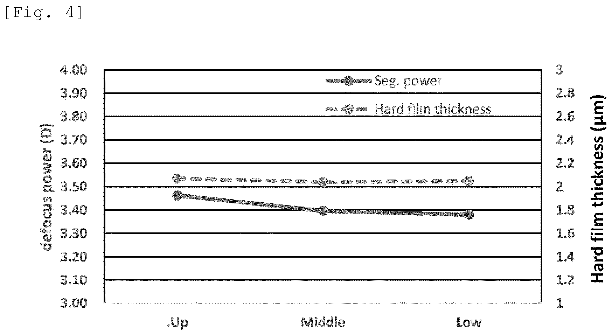

   In Fig. 4, the left vertical axis (unit: D (diopter)) indicates the defocus power of convex regions at specified positions of the spectacle lens according to a first embodiment, where the horizontal axis indicates the positions on a vertical line passing through the lens center of the spectacle lens according to first embodiment. In addition, "Up" indicates the convex region of the spectacle lens that corresponds to the substrate protrusion located at the uppermost portion in the up-down direction of a lens substrate during an immersion step. "Middle" indicates the convex region closest to the lower end of a central clear region. "Low" indicates the convex region of the spectacle lens that corresponds to the substrate protrusion of the lens substrate located at the lowermost portion in the up-down direction during the immersion step. In Fig. 4, the right vertical axis (unit: µm) indicates the film thicknesses of a hard coat film in the outer clear region and the central clear region of the spectacle lens according to the first embodiment, where the horizontal axis indicates the positions on the vertical line passing through the lens center of the spectacle lens. In addition, "Up" indicates the position 5 mm above the substrate protrusion located at the uppermost position in the up-down direction of the lens substrate during the immersion step. "Middle" indicates the lower end of the central clear region. "Low" indicates the position 5 mm below the substrate protrusion located at the lowermost portion in the up-down direction of the lens substrate during the immersion step.

### [Description of Embodiments]

Hereinafter, embodiments of the present invention will be described. The following descriptions based on the drawings are illustrative, and the present invention is not limited to the illustrated aspects. In this specification, the symbol "~" refers to values that are specified numerical values or more and specified numerical values or less.

Fig. 2 is a schematic plan view of a spectacle lens according to one aspect of the present invention.

The spectacle lens described in this specification has an object-side surface and an eye-side surface. The "object-side surface" refers to the surface located on the object side when the spectacles with the spectacle lens are worn by the wearer, while the "eye-side surface" refers to the surface located on the opposite side, that is, on the eye side when the spectacles with the spectacle lens are worn by the wearer. This relationship also applies to the lens substrate that forms the basis of the spectacle lens. In other words, the lens substrate also has the object-side surface and the eye-side surface.

In this specification, the horizontal direction and the up-down (vertical) direction in a state in which the spectacle lens is worn are defined as the X direction and the Y direction, respectively, and the direction corresponding to the thickness direction of the spectacle lens and perpendicular to the X direction and the Y direction is defined as the Z direction. The Z direction also corresponds to the direction of the optical axis of the spectacle lens. The origin is set at the lens center. Note that in this specification, the "lens center" refers to the optical center or the geometric center of the spectacle lens. In this specification, a case in which the optical center and the geometric center substantially coincide with each other will be illustrated. The "geometric center" refers to the center of the circle in the case of a circular shape in plan view, such as an uncut lens before lens shaping, and refers to the center of gravity in plan view in the case of other shapes.

Relative to the wearer, the right side is defined as the +X direction, the left side is defined as the -X direction, the upper side is defined as the +Y direction, the lower side is defined as the -Y direction, the object-side direction is defined as the +Z direction, and the opposite direction (depth-side direction) is defined as the -Z direction. In this specification, the "plan view" refers to a state when viewed from the +Z direction to the -Z direction.

In each figure of the present application, a case in which a right-eye lens is viewed in plan is illustrated, and the nose-side direction and the ear-side direction when the right-eye lens is worn are defined as the +X direction and the -X direction, respectively.

Note that when a functional region is provided only on the outermost surface on the eye side, a state viewed from the -Z direction to the +Z direction may be defined as plan view. Hereinafter, when discussing "positions," such as an eye point and a geometric center in the spectacle lens, they refer to positions in plan view, unless otherwise specified.

In this specification, the symbol "to" refers to values that are specified numerical values or more and specified numerical values or less.

### <Functional Configuration of Spectacle Lens>

The spectacle lens according to one aspect of the present invention includes a central clear region and a functional region.

The central clear region is a portion having a smooth surface shape that is capable of realizing the prescription power of the wearer from a geometric optical standpoint, and is, for example, a portion that is transparent in the visible light wavelength range. The central clear region is a portion that corresponds to the first refraction region in PTL 1.

Furthermore, the central clear region is a region including the lens center and/or an eye point, and is a region that causes a light flux incident from the object-side surface to be emitted from the eye-side surface, enter the pupil of the wearer, and be focused on the retina.

The central clear region according to one aspect of the present invention can realize prescription power (spherical power, cylindrical power, astigmatism axis, or the like). This spherical power may be power to be corrected for frontal vision (for example, distance power, which will be illustrated hereinafter) (where the distance to an object is from infinity to approximately 1 m), or it may be power to be corrected for intermediate vision (1 m to 40 cm) or distance vision (40 cm to 10 cm).

No convex region is provided in the central clear region. The lens center may be referred to as the geometric center or the center of gravity of the central clear region.

The central clear region (and a base region in the functional region, and further an outer clear region) according to one aspect of the present invention function as a so-called single-focal lens.

Incidentally, prescription data on wearer's information is indicated on the lens bag of the spectacle lens. In other words, if there is a lens bag, identification of the spectacle lens as an object is possible on the basis of prescription data on wearer's information. Further, the spectacle lens is usually paired with a lens bag. Accordingly, the technical idea of the present invention is also reflected in spectacle lenses accompanied by a lens bag, and the same applies to a set consisting of a lens bag and a spectacle lens.

The "eye point (EP)" is, for example, a position through which the line of sight passes when the wearer is facing directly forward with the spectacle lens worn, and this example will be illustrated hereinafter. The eye point may also be a position through which the line of sight passes when the wearer visually recognizes an object close to the wearer (i.e., near vision), that is, a near-vision eye point. In one aspect of the present invention, a case will be illustrated in which the geometric center of the spectacle lens before processing for frame insertion coincides with the eye point, the prism reference point, and the lens center. Hereinafter, the spectacle lens before processing for frame insertion will be illustrated as the spectacle lens according to one aspect of the present invention, but the present invention is not limited to this aspect.

The position of the eye point can be identified by referring to a Remark chart or a Centration chart issued by the lens manufacturer.

The functional region is an annular region that is adjacent to and surrounds the central clear region in plan view.

For example, when convex regions are provided in an island shape as in the second refraction areas of PTL 1, while a first refraction area (base region having the same function as that of the central clear region) for realizing prescription power is provided around the convex regions, an annular region including both the base region and the convex regions may be regarded as the functional region.

Furthermore, in the spectacle lens in which the convex regions are formed in a chain-like manner in an annular shape and a plurality of such chained rings are arranged in the radial direction, and in which regions where the convex regions are not formed are regarded as a base region, the region between the chained ring having the minimum diameter and the chained ring having the maximum diameter may be defined as the functional region.

Furthermore, when components having different refractive indices are embedded in the spectacle lens, the annular region between the portion closest to the eye point EP and the portion farthest from the eye point may also be defined as the functional region.

A region composed of a plurality of convex regions that cause a light flux incident from the object-side surface to be emitted from the eye-side surface, while providing positive defocus power to focus a light flux incident on the wearer's pupil at a position in front of the light flux that has passed through the base region is also referred to as a defocus region. This region may also be referred to as a region having power different than the prescription power, that is, a non-focused region on the retina, and may also be a region that does not focus the light flux incident on the wearer's pupil on the retina. Within the functional region, the region excluding the base region is the defocus region.

One aspect of the present invention includes an annular outer clear region that is adjacent to and surrounds the functional region on the outer edge side of the spectacle lens. The outer clear region causes a light flux incident from the object-side surface to be emitted from the eye-side surface, enter the wearer's pupil, and be focused on the retina. In other words, the functional region is an annular region present between the outer clear region and the central clear region.

### <Physical Configuration of Spectacle Lens>

The spectacle lens according to one aspect of the present invention includes not only the functional configuration described above but also the following physical configuration.
- A lens substrate having a substrate base portion and a plurality of substrate protrusions protruding from the substrate base portion on its surface.
- A hard coat film that forms the base regions so as to cover the substrate base portion and forms the defocus region so as to cover the plurality of substrate protrusions by covering the lens substrate including the plurality of substrate protrusions.

Note that the materials and other properties of the lens substrate and the hard coat film will be described in detail in <Method for Producing Spectacle Lens> described later.

The lens substrate is not limited as long as it has the substrate base portion and the plurality of substrate protrusions protruding from the substrate base portion.

The substrate base portion is a portion having a shape that is capable of realizing the prescription power of the wearer.

The substrate protrusions are portions corresponding to the minute protrusions described in PTL 1. The spectacle lens according to one aspect of the present invention is capable of suppressing the progression of myopia. Consequently, the lens substrate itself is capable of suppressing the progression of myopia. Similar to the minute convex portions described in PTL 1, the plurality of substrate protrusions according to one aspect of the present invention only need to be formed on at least one of the object-side surface and the eye-side surface of the lens substrate, and this situation is referred to as "protruding from the substrate base portion on the surface of the lens substrate." In this specification, a case in which the plurality of substrate protrusions are provided only on the object-side surface of the lens substrate will mainly be illustrated.

Note that in this specification, a case in which the lens substrate is a plastic lens substrate or a glass lens substrate itself will mainly be illustrated. On the other hand, other substances such as a foundation film may also be laminated on the lens substrate. When the lens substrate has other substances laminated thereon, irregularities resulting from the plurality of substrate protrusions are present on the lens substrate, and the plurality of substrate protrusions refer to those that can exert a myopia progression suppressing effect even when other substances are laminated.

### <Characteristics of Spectacle Lens>

In the spectacle lens according to one aspect of the present invention,
the defocus power of the convex regions tends to increase from the upper side to the lower side of the spectacle lens when worn. This tendency of the increase is provided by the hard coat film.

The definition of "the defocus power of the convex regions tends to increase from the upper side to the lower side of the spectacle lens when worn" is as follows.

In one aspect of the present invention, the defocus power is controlled from a macro-level perspective in which the overall defocus power of the convex regions from the upper side to the lower side of the spectacle lens is controlled, rather than from a micro-level perspective in which the defocus power of one convex region is controlled. Therefore, this specification describes that the defocus power "tends" to increase. As long as the above content is satisfied as a trend, the overall situation will not be affected even if there is one convex region with irregular defocus power.

It is sufficient that the condition that "the defocus power of the convex regions increases from the upper side to the lower side of the spectacle lens when worn" is satisfied by 80 area% or more (preferably in the following order: 85 area% or more, 90 area% or more, 95 area% or more, 98 area% or more, 99 area% or more, or 100 area%) of the convex regions.

The aspect of "the defocus power of the convex regions increases" is not limited, provided that the defocus power of the lowermost convex region is greater than that of the uppermost convex region.

As one specific example of "the defocus power of the convex regions increases from the upper side to the lower side of the spectacle lens when worn," the convex region that provides the maximum value of the defocus power and the convex region that provides the minimum value of the defocus power among those located on the vertical line passing through the lens center are the lowermost convex region and the uppermost convex region, respectively. Preferably, on the vertical line passing through the lens center, the defocus power does not decrease from the upper side to the lower side. Even if the defocus power decreases from the upper side to the lower side, the rate of decrease in the defocus power from the defocus power of the convex region located on the uppermost side in the spectacle lens is preferably less than 5% (more preferably less than 3%, less than 2%, or less than 1%). A state in which the defocus power does not decrease, or decreases only slightly as described above is also referred to as a monotonic increase in this specification.

"From the upper side to the lower side" includes, but is not limited to, the Y direction, which represents a straight line in plan view and extends from the +Y direction to the -Y direction. In a broad sense, "from the upper side to the lower side" refers to a direction other than the X direction in plan view. Preferably, "from the upper side to the lower side" refers to a range of directions extending from directions within ± 60 degrees (or 45 degrees, 30 degrees, or 15 degrees) in the +Y direction toward directions within ± 60 degrees (or 45 degrees, 30 degrees, or 15 degrees) in the -Y direction. Hereinafter, for convenience of explanation, the direction from the +Y direction toward the -Y direction will be illustrated.

For example, among the convex regions of the spectacle lens, the defocus power of a convex region (part 2) that is adjacent in the -Y direction to a convex region (part 1) located farthest in the +Y direction is made greater than that of the convex region (part 1). Further, the defocus power of a convex region (part 3) that is adjacent in the -Y direction to the convex region (part 2) is made greater than that of the convex region (part 2). In this manner, the defocus power may be continuously increased from the upper side to the lower side.

Alternatively, while the defocus power of the convex region (part 1) and the defocus power of the convex region (part 2) that is adjacent in the -Y direction to the convex region (part 1) are made equal, the defocus power of the convex region (part 3) that is adjacent in the -Y direction to the convex region (part 2) may be made greater than that of the convex region (part 2). In this manner, the defocus power may be increased discontinuously from the upper side to the lower side.

By adopting the above-described configuration, the increase in the defocus power can serve as compensation. As a result, a decrease in the apparent power during near vision can be suppressed. As will be described in detail later, this increase in the defocus power of the convex regions is realized through the hard coat film.

Note that, in a case in which the spectacle lens according to one aspect of the present invention is a single-focal lens and an uncut lens before lens shaping, a direction indicating portion that indicates the direction of the spectacle lens when worn is provided. If the direction indicating portion is provided, an operator can recognize the wearing direction during lens shaping, and the lens can be mounted in the frame of the spectacles such that the defocus power of the convex regions increases from the upper side to the lower side of the spectacle lens when worn.

The aspect of this direction indicating portion is not limited, and it may be a symbol or a character. Furthermore, a marking may be provided on the lens substrate or another substance (for example, a hard coat film or an anti-reflection film). Furthermore, in plan view of the spectacle lens, the position where the direction indicating portion is provided is not limited to the inside or outside of the frame (lens shaping). Furthermore, the direction indicating portion is not limited to a symbol or character marking. In a case in which the spectacle lens includes a gradation such as color in a specified direction, the gradation serves as the direction indicating portion.

In a case in which the spectacle lens according to one aspect of the present invention is a progressive power lens, the progressive power lens is provided with a hidden mark that allows for the identification of the positions of an eye point, an optical center, a distance power measurement reference point, a near power measurement reference point, and the like. Therefore, even an uncut lens before lens shaping allows for the identification of the direction when worn. In other words, this hidden mark is included in the direction indicating portion.

The spectacle lens according to one aspect of the present invention can suppress a decrease in apparent power during near vision for each wearer.

### <Preferred Examples and Modified Examples of Spectacle Lens 1>

Preferred examples and modified examples of the spectacle lens 1 according to one aspect of the present invention will be described below.

The central clear region that is surrounded by the functional region and includes the eye point may be further provided, wherein the central clear region causes a light flux incident from the object-side surface to be emitted from the eye-side surface, enter the wearer's pupil, and be focused on the retina to achieve the wearer's prescription power.

The size and shape of the central clear region 2 are not limited. As one guideline for the lower limit of the size of the central clear region 2, it may be sufficient if the region can encompass a circle having a diameter of 5.00 mm about the eye point EP. As one guideline for the upper limit of the size of the central clear region 2, it may be sufficient if the region can fit within a circle having a diameter of 10.00 mm about the eye point EP. The minimum value of the horizontal distance from the eye point EP to the edge of the central clear region 2 (i.e., the minimum radius when the clear region is circular in plan view) may be 3.60 mm or less. The area of the central clear region 2 may be 80 mm² or less. The shape of the central clear region 2 may be circular, rectangular, oval, or the like in plan view. By adopting the configuration described in the present paragraph, sufficiently good visibility can be obtained during frontal vision.

The "aggregate of clear pupil circles" may be referred to as the shape of the central clear region 2. Specifically, in plan view, in a circle having a radius of r [mm], the center of which lies on a horizontal line passing through the eye point EP within the central clear region 2, the value 2r corresponds to the pupil diameter when r is at least one value in the range from 1.50 or more to 2.50 or less (particularly r = 1.50 or 2.00). In this specification, this circle is also referred to as a "clear pupil circle."

The size and shape of the functional region 3 are not limited. As one guideline for the lower limit of the size of the functional region 3, it may be sufficient if the region can encompass a circumference having a diameter of 15.00 mm about the eye point EP. As one guideline for the upper limit of the size of the functional region 3, it is sufficient if the region can encompass a circumference having a diameter of 50.00 mm about the eye point EP. The shape of the functional region 3 is annular in plan view, and the ring may have a circular shape, a rectangular shape, an oval shape, or the like, or a combination thereof on the inner side (i.e., the boundary between the central clear region 2 and the functional region 3) and/or the outer side (i.e., the boundary between the outer clear region 4 and the functional region 3).

As one guideline, it may be defined that 30% or more (or 40% or more, 50% or more, or 60% or more) of the light flux incident on the wearer's pupil is not focused on the retina in the functional region 3. If the value of the percentage is large, the myopia progression suppressing effect is expected to increase, while the visibility decreases. The value of the percentage may be appropriately determined in consideration of the balance between the myopia progression suppressing effect and the visibility. The upper limit may be, for example, 70%.

In other words, in the functional region 3, the area of the convex regions 3a in plan view may be defined as 20% or more (or 30% or more, 40% or more, 50% or more, or 60% or more) of the entire functional region 3. The upper limit may be, for example, 80%. The defocus regions 3a may be arranged so as to become sparser or denser toward the outer edge of the functional region 3.

In plan view, the area of the defocus regions 3a provided within the functional region 3 relative to the entire area of the spectacle lens 1 is preferably 20% or less (or 15% or less, or 10% or less). The lower limit may be, for example, 5% or more.

In plan view, the area (area ratio) of the defocus regions 3a provided within the functional region 3 to the area of the defocus regions 3a in the entire spectacle lens 1 is preferably 80% or more. This area ratio is preferably 85% or more, 90% or more, 95% or more, 98% or more, and 99% or more in this order.

The outer clear region that serves as an annular region surrounding the functional region on the outer edge side of the spectacle lens may be further provided, wherein the outer clear region causes a light flux incident from the object-side surface to be emitted from the eye-side surface, enter the wearer's pupil, and be focused on the retina to achieve the wearer's prescription power.

In that case, the functional region 3 serves as an annular region that is present between the outer clear region 4 and the central clear region 2. The "aggregate of clear pupil circles" may also be referred to as the shape of the outer clear region 4. Further, in the spectacle lens 1, the region excluding the central clear region 2 and the outer clear region 4 may be defined as the functional region 3.

The outer clear region 4 may be annular, or may have a shape that forms only a portion of the ring. In other words, one portion of the functional region 3 may contact the outer edge of the spectacle lens 1, while another portion of the functional region 3 may contact the outer clear region 4. Furthermore, the spectacle lens 1 according to one aspect of the present invention may be the spectacle lens 1 after being inserted into a frame, and one portion of the functional region 3 in the spectacle lens 1 may contact the outer edge of the spectacle lens 1, while another portion of the functional region 3 may contact the outer clear region 4.

Furthermore, providing another functional region 3 on the outer edge side of the outer clear region 4 is not precluded. However, in consideration of facilitating good visibility even in the peripheral visual field, it is preferable that no convex regions 3a be provided between the outer edge of the spectacle lens 1 and the functional region 3. In other words, it is preferable that the entire region between the outer edge and the functional region 3 in the spectacle lens 1 form the outer clear region 4.

The effects of the present invention are achieved even if all the convex regions in the functional region do not necessarily satisfy the condition "the defocus power increases from the upper side to the lower side of the spectacle lens when worn."

For example, provided that the number (number ratio) of the convex regions that satisfy the definition described in this paragraph accounts for 80% or more (preferably in the following order: 85% or more, 90% or more, 95% or more, 98% or more, or 99% or more) of the number of all the convex regions in the functional region, the likelihood of achieving the effects of the present invention increases. The number ratio is preferably 85% or more, 90% or more, 95% or more, 98% or more, and 99% or more in this order.

In other words, provided that the area (area ratio) of the convex regions that satisfy the definition described in this paragraph accounts for 80% or more of the total area of all the convex regions in the functional region, the likelihood of achieving the effects of the present invention increases. This area ratio is preferably 85% or more, 90% or more, 95% or more, 98% or more, and 99% or more in this order.

The defocus power of 80% or more (preferably in the following order: 85% or more, 90% or more, 95% or more, 98% or more, and 99% or more) of the convex regions in the spectacle lens is not limited but may be in the range of, for example, 3.0 to 5.0 D.

The defocus power of 80% or more (preferably in the following order: 85% or more, 90% or more, 95% or more, 98% or more, and 99% or more) of the substrate protrusions in the lens substrate may fall within the range of ± 0.12 D (preferably in the following order: ± 0.10 D, ± 0.08 D, ± 0.06 D, ± 0.04 D, ± 0.02 D, and ± 0.01 D).

The definition described in the above paragraph refers to the variation width of the defocus power for each substrate protrusion in the defocus power provided in the substrate protrusions.

For example, in design, when the defocus power of all the substrate protrusions is 3.50 D, the defocus power of 80% or more of the substrate protrusions falls within the range of 3.50 ± 0.12 D.

This variation width may be set to ± 0.12 D relative to the average value of the defocus power of all the substrate protrusions.

Furthermore, this variation width may be set to less than 5%, less than 3%, less than 2%, or less than 10 of the average value of the defocus power of all the substrate protrusions.

Furthermore, in consideration of ± 0.12 D, it may also be expressed that the substrate protrusions in which the difference between the maximum and minimum values of the defocus power falls within 0.24 D accounts for 80% or more.

According to this configuration, it becomes clearer that while the defocus power of the multiple substrate protrusions remains almost constant, the defocus power of the convex regions increases from the upper side to the lower side of the spectacle lens with the formation of the hard coat film.

Generally, a cornea vertex distance L of children's spectacles is considered to be 12 mm, but there are many examples in which it is set to approximately 10 mm or 15 mm. Furthermore, a distance T during near vision ranges from at least approximately 250 mm to 500 mm. When this is applied to the above Formula, the defocus power to be provided to the lower portion of the lens becomes approximately 1.02 to 1.06 times the original defocus power.

As described in the section of "Solution to Problem" of the present invention, during viewing of the myopia progression suppressing lens in near vision, when the defocus power of each convex region located at a position through which the line of sight passes is increased in advance, the apparent power during near vision becomes approximately equal to the original power if the power is increased by (1 + L/S)^2 times. However, considering that the lower portion of the lens is not always used for near vision and is used for distance vision during walking or the like, it is well balanced to increase the power by (1 + L/ S) times, which is an intermediate value between one time and (1 + L/ S)^2 times. In the foregoing case, it is preferable to increase the defocus power by 1.04 times.

Because values of approximately 1.02 to 1.06 times, as well as a value of 1.04 times, are balanced values considering the fact that both near vision and distance vision are performed in the lower portion of the lens as described above. Therefore, for children who use the lens only for near vision, a squared value (1.04 to 1.12) may be adopted to completely compensate for a decrease in apparent power. Furthermore, for children who rarely engage in near vision, a square root value (1.01 to 1.03), which further reduces the correction effect by half may be adopted.

In other words, when the defocus power of the convex regions increases from the upper side to the lower side of the spectacle lens, the lower limit of the increase ratio (the ratio (%) of the difference between the maximum and minimum values to the minimum value of the defocus power of the convex regions on the vertical line passing through the lens center) may be a value between 1 and 3%, and the upper limit thereof may be a value between 4 and 12%.

The defocus power of the convex regions is preferably 3.0 to 5.0 D. Therefore, when the defocus power of the convex regions increases from the upper side to the lower side of the spectacle lens, the lower limit of the increase amount (the difference between the maximum and minimum values of the defocus power of the convex regions on the vertical line passing through the lens center) may be a value between 0.03 and 0.10 D, and the upper limit thereof may be a value between 0.12 and 0.60 D.

It can be said that the increase in the defocus power of the convex regions described in the above paragraph occurs as the defocus power of the convex regions approaches the defocus power of the substrate protrusions underlying the hard coat film in the convex regions from the upper side to the lower side of the spectacle lens when worn.

As described in the findings of the present invention, one aspect of the present invention is that the hard coat film suppresses a decrease in apparent power during near vision. When the dip method is employed, the defocus power of the convex regions arranged on the upper side tends to be higher than that of the convex regions arranged on the lower side during immersion in the hard coat liquid, as will be described in the section of the embodiment given later. This tendency also appears even when the difference in the film thickness of the hard coat film between the central clear region and the outer clear region that sandwich the functional region therebetween is small. This difference in the film thickness may be defined as follows.

"The difference in the average film thickness of the hard coat film between the central clear region and the outer clear region is within 10% (or within 8%, 5%, or 3%)."

### <One Specific Example of Spectacle Lens 1>

The aspect of the arrangement of the convex regions is not particularly limited, and can be determined, for example, from the viewpoint of the visibility of the convex regions from the outside, the impartation of design characteristics by the convex regions, the adjustment of power by the convex regions, and the like. Note that the convex regions are an example of defocus regions, and are composed of a plurality of convex regions that cause a light flux incident from the object-side surface to be emitted from the eye-side surface, while providing positive defocus power to focus the light flux incident on the wearer's pupil at a position in front of the light flux that has passed through the base region. As one specific example, the convex regions do not focus a light flux on the retina, but focus the light flux at a position (+Z direction side) in front of the retina. Hereinafter, this specific example will now be described.

In the functional region 3 arranged around the central clear region 2 of the spectacle lens 1, substantially circular convex regions may be arranged in an island shape (i.e., in a state in which they are spaced apart from each other without being adjacent) at even intervals in both the circumferential and radial directions. As one example of the arrangement of the convex regions in plan view, each convex region 3a is discretely and independently arranged such that its center is positioned at a vertex of an equilateral triangle (the center of each convex region is arranged at a vertex of a honeycomb structure: a hexagonal arrangement). In this case, the interval between the convex regions may be 1.0 to 2.0 mm. Furthermore, the number of the convex regions (consequently, the defocus regions) may be 10 to 200.

In the functional region 3, the convex regions are an example of a configuration (defocus regions) that achieves the myopia progression suppressing effect.

The convex regions are regions in which, from a geometrical optics viewpoint, at least a part does not focus light on the light focusing position by the base region 3b. The convex regions are portions corresponding to the minute convex portions described in PTL 1. The spectacle lens 1 according to one aspect of the present invention is a myopia progression suppressing lens, similar to the spectacle lens described in PTL 1. Similar to the minute convex portions described in PTL 1, the plurality of convex regions according to one aspect of the present invention only need to be formed on at least one of the object-side surface and the eye-side surface of the spectacle lens 1. In this specification, a case in which the plurality of convex regions are provided only on the object-side surface of the spectacle lens 1 will mainly be illustrated. Hereinafter, unless otherwise indicated, a case in which the convex regions have a curved surface shape that protrudes toward the outside of the lens will be illustrated.

It is preferable that half or more of the plurality of convex regions (all the convex regions within the functional region) be arranged at equal intervals in plan view. One example of a pattern with equal intervals is an equilateral triangle arrangement (where the centers of the convex regions are arranged at the vertexes of an equilateral triangle net) in plan view. Preferably 80% or more, more preferably 90% or more, and still more preferably 95% or more of the convex regions are arranged. Hereinafter, preferred examples of "half or more (or 80% or more) of all the convex regions within the functional region" are given in the preferred order of 80% or more, 90% or more, and 95% or more similar to the above, and their duplicated description will be omitted.

The convex regions may have a spherical shape, an aspherical shape, a toric surface shape, or a mixed shape of these shapes (for example, the central portion of each convex region has a spherical shape, and the peripheral portion outside the central portion has an aspherical shape). The boundary between the central portion and the peripheral portion may be provided at a location corresponding to one-third to two-thirds of the radii of the convex regions in plan view. However, it is preferable that at least the central portions of the convex regions have a convex curved surface shape protruding toward the outside of the lens. Furthermore, because half or more of the plurality of convex regions (all the convex regions within the functional region) are preferably arranged at equal intervals in plan view, it is preferable that the convex regions have a spherical shape.

Each convex region is configured, for example, as follows. The diameter of the convex regions is preferably approximately 0.6 to 2.0 mm in plan view. The surface area of each convex region may be approximately 0.50 to 3.14 mm². The radius of curvature of the convex regions 3a is approximately 50 to 250 mm, and is preferably approximately 86 mm in a spherical shape.

The specific numerical value of the defocus power in each convex region is not limited. However, for example, the minimum value of the defocus power provided by the convex regions on the spectacle lens 1 is preferably in the range of 0.50 to 4.50 D, and the maximum value thereof is preferably in the range of 3.00 to 10.00 D. The difference between the maximum value and the minimum value is preferably in the range of 1.00 to 5.00 D.

The "defocus power" refers to the difference between the power of each convex region and the power of a portion other than each convex region. In other words, the "defocus power" is the difference obtained by subtracting the power of the base region from the average value of the minimum power and the maximum power at a specified location in the convex region.

In this specification, the "power" refers the average power, which is the average value of the power in the direction in which the power becomes minimum and the power in the direction (direction perpendicular to the direction) in which the power becomes maximum.

The lens substrate is made of, for example, a thermosetting resin material such as thiourethane, aryl, acrylic, or epithio, or a thermoplastic resin material such as polycarbonate. Note that as the resin material for forming the lens substrate, another resin material capable of obtaining a desired refractive index may also be selected. Furthermore, the lens substrate may be made of inorganic glass instead of a resin material.

The hard coat film is formed by using, for example, a thermosetting resin, a thermoplastic resin, or a UV-curable resin. The hard coat film can be formed by using a method for immersing the lens substrate in the hard coat liquid, spin coating, or the like. The application of such a hard coat film can enhance the durability of the spectacle lens 1.

The anti-reflection film is formed by, for example, depositing an anti-reflection agent such as ZrO₂, MgF₂, Al₂O₃, or SiO₂ through a vacuum-deposition method, an ion plating method, a sputtering method, or the like. The application of such an anti-reflection film can enhance the visibility of an image through the spectacle lens 1.

One or more coating films can also be formed on the anti-reflection film. Examples of such coating films include various coating films such as water-repellent or hydrophilic anti-fouling films and anti-fogging films. Known techniques can be applied as methods for forming these coating films.

The film thickness of the hard coat film may be, for example, in the range of 0.1 to 100 µm (preferably in the range of 0.5 to 5.0 µm, and more preferably in the range of 1.0 to 3.0 µm). However, the film thickness of the hard coat film should be determined according to its required functions and is not limited to the exemplified ranges. The definition of the film thickness in this paragraph is also applicable to the entire coating film formed by a combination of various films provided on the lens substrate.

### <Spectacles>

The technical idea of the present invention is also reflected in spectacles in which the vicinity of the peripheral edge of the spectacle lens 1 is cut on the basis of a specified frame shape and the spectacle lens 1 is mounted in the frame. The type, shape, and the like of the frame are not limited, and the frame may be of a full rim, half rim, under rim, or rimless type.

The configuration of the spectacles according to one aspect of the present invention is as follows.

"The spectacles in which a spectacle lens is mounted in a frame, the spectacle lens achieving a myopia progression suppressing effect and including the functional region having
the base region that causes a light flux incident from the object-side surface to be emitted from the eye-side surface, enter the wearer's pupil, and be focused on the retina to achieve wearer's prescription power, and
the defocus region composed of the plurality of convex regions that cause a light flux incident from the object-side surface to be emitted from the eye-side surface, while providing positive defocus power to focus a light flux incident on the wearer's pupil at a position in front of a light flux that has passed through the base region,
the spectacle lens including:
   the lens substrate having the substrate base portion and the plurality of substrate protrusions protruding from the substrate base portion on a surface thereof; and
   the hard coat film that forms the base region so as to cover the substrate base portion and forms the defocus region so as to cover the plurality of substrate protrusions by covering the lens substrate including the plurality of substrate protrusions,
   wherein
   the defocus power of the convex regions tends to increase from the upper side to the lower side of the spectacle lens when worn."

Note that the vertical direction of the spectacle lens has already been fixed when it is assembled into the spectacles. Therefore, when assembled into spectacles, the spectacle lens mounted in the frame does not need to include a direction indicating portion.

### <Method for Producing Spectacle Lens>

A method for producing the spectacle lens according to one aspect of the present invention will be described. Content not described below may be understood with reference to the previously-described content related to the spectacle lens.

Fig. 3 is a schematic flow diagram of the method for producing the spectacle lens according to one aspect of the present invention.

In the method for producing the spectacle lens according to one aspect of the present invention, at least the following steps are performed.
- An immersion step of immersing the lens substrate in the hard coat liquid, the lens substrate having the substrate base portion and the plurality of substrate protrusions protruding from the substrate base portion on its surface.
- A lifting step of lifting the lens substrate from the hard coat liquid.
- A drying step of obtaining the hard coat film that forms the base region so as to cover the substrate base portion and forms the defocus region so as to cover the plurality of substrate protrusions by covering the lens substrate including the plurality of substrate protrusions.

Regarding the specific operations of the immersion step, the lifting step, and the drying step, known methods may be employed.

One feature of the method for producing the spectacle lens according to one aspect of the present invention is as follows. However, classification is made into Case (1) in which the lens substrate includes the direction indicating portion that indicates the direction of the spectacle lens when worn and Case (2) in which the lens substrate does not include the direction indicating portion.

### [Case (1)]

In a case in which the lens substrate includes the direction indicating portion that indicates the direction of the spectacle lens when worn, the lens substrate of the spectacle lens when worn is immersed in the hard coat liquid from the upper side prior to the immersion step.

According to a general concept, during immersion in the hard coat liquid, the upper side of the lens substrate is directed upward and the lower side thereof is directed downward in the up-down direction, while maintaining that posture. On the other hand, according to the method for producing the spectacle lens of one aspect of the present invention, the posture is inverted. In other words, according to the method for producing the spectacle lens of one aspect of the present invention, the upper side of the lens substrate is first brought into contact with the hard coat liquid, and the lower side of the lens substrate is immersed last in the hard coat liquid during immersion in the hard coat liquid. Then, the lens substrate is lifted upward while maintaining the inverted posture.

By adopting this configuration, the defocus power of the convex regions arranged on the upper side becomes higher than that of the convex regions arranged on the lower side during immersion in the hard coat liquid, as will be described in the section of the embodiment given later.

This is because the portion of the lens substrate that is first withdrawn from the hard coat liquid during the lifting step is relevant. The portion that is first withdrawn from the hard coat liquid is exposed to the atmosphere at an earlier time.

Subsequently, when the lens substrate is being withdrawn from the hard coat liquid, the liquid pools formed between the respective substrate protrusions of the portion that is first withdrawn from the hard coat liquid are exposed to the atmosphere earlier. Therefore, the liquid pools are eliminated by their own weight, or, when the viscosity of the hard coat liquid is high, by being pulled down by the own weight of the hard coat liquid in the tank.

The portion that is first withdrawn from the hard coat liquid corresponds to the portion of the lens substrate, and consequently to the spectacle lens (i.e., the lower side of the spectacle lens) through which the line of sight passes during near vision. Therefore, because the liquid pools of the hard coat liquid have been eliminated, each convex region on the lower side of the spectacle lens favorably follows the shape of each substrate protrusion of the lens substrate. As a result, the convex regions on the lower side of the spectacle lens exhibit defocus power close to that set in each substrate protrusion of the lens substrate.

On the other hand, the portion that is later withdrawn from the hard coat liquid is exposed to the atmosphere for a shorter period of time than the portion that is first withdrawn from the hard coat liquid. Accordingly, the drying step begins even before the liquid pools are eliminated.

Even if a sufficient amount of time is provided between the completion of the lifting step and the drying step, liquid pools are likely to be formed between the convex regions in the portion that is later withdrawn from the hard coat liquid due to the own weight of the hard coat liquid on the lens substrate.

To begin with, if an excessive amount of is provided, there is a risk that the difference in film thickness between the outer clear region of the portion that is first withdrawn from the hard coat liquid and the outer clear region of the portion that is later withdrawn from the hard coat liquid becomes excessive. Therefore, it is preferable to shift from the lifting step to the drying step without providing excessive time. However, this also results in a situation where the liquid pools are likely to be formed between the convex regions of the portion that is later withdrawn from the hard coat liquid.

However, in the spectacle lens according to one aspect of the present invention, the lens substrate is immersed in the hard coat liquid in a vertically inverted posture. Therefore, liquid pools are formed between the convex regions in the portion of the spectacle lens through which the line of sight passes during distance vision (from the central to upper side of the spectacle lens).

In this portion, it is not necessary to consider the content related to the near vision, which is described as the problem to be addressed by the present invention. In other words, even if liquid pools are formed between the convex regions in the portion of the spectacle lens through which the line of sight passes during distance vision (from the central to upper side of the spectacle lens), it does not interfere with the solution of the problem addressed by the present invention.

Rather, one aspect of the present invention is characterized in that, even at the expense of the portion through which the line of sight passes during distance vision (from the central to upper side of the spectacle lens), the problem of suppressing a decrease in apparent power during near vision is suppressed is solved in the portion (lower side of the spectacle lens) through which the line of sight passes during near vision.

In addition, according to the method for producing the spectacle lens of one aspect of the present invention, the hard coat film is controlled, rather than using a die, by a simple idea of vertically inverting the posture in which the lens substrate is immersed in the hard coat liquid, thereby making it possible to suppress the decrease in apparent power during near vision and, consequently, reduce cost and time.

### [Case (2)]

In a case in which the lens substrate does not include the direction indicating portion that indicates the direction of the spectacle lens when worn, it is preferable to perform, prior to the immersion step, a direction indicating portion setting step in which the side of the lens substrate that first comes into contact with the hard coat liquid is set as the upper side of the lens substrate, the opposite side is set as the lower side thereof, and the direction indicating portion that indicates the direction of the spectacle lens when worn is provided on the lens substrate or the spectacle lens in accordance with this setting.

In Case (2), with respect to the lens substrate whose orientation has not been determined prior to the immersion step, the portion of the lens substrate that first comes into contact with the hard coat liquid is set as the lower side of the lens substrate when assembled into the spectacle lens. In other words, with respect to the lens substrate whose orientation has not been determined prior to the immersion step, the direction of the spectacle lens is set starting with the immersion step.

The specific content of the direction indicating portion setting step is not limited, as long as the direction indicating portion that makes it possible to determine that the portion of the lens substrate that first comes into contact with the hard coat liquid is set as the lower side of the lens substrate when assembled into the spectacle lens is provided on the lens substrate or the spectacle lens. An example of the specific content of the direction indicating portion setting step is as follows.
- Prior to the immersion step, the peripheral edge of the lens substrate, which corresponds to a region outside the frame, is scratched (Fig. 3 shows this example).
- During the immersion step, the peripheral edge of the lens substrate, which corresponds to the region outside the frame, is masked to create a state in which the hard coat film has not been formed only on a part of the lens substrate.
- After the drying step, the peripheral edge of the lens substrate, which corresponds to the region outside the frame, is marked.

The hard coat film only needs to be formed on at least the substrate protrusions of the lens substrate. However, because the dip method is employed, it is preferable to form the hard coat film on both surfaces of the lens substrate.

In the dip method of this specification, a case is primarily illustrated in which the lowermost end of the lens substrate is first immersed in the hard coat liquid and the uppermost end thereof is finally immersed, thereby immersing the entire lens substrate in the hard coat liquid. During lifting, the lens substrate is lifted upward in the vertical direction in the reverse order. On the other hand, the lens substrate may be immersed in the hard coat liquid while being tilted slightly from the vertical direction toward the horizontal direction, and then lifted in this state. In any case, the hard coat liquid on the lens substrate flows downward along the lens substrate due to its own weight.

The hard coat liquid is not limited as long as a hard coat film can be formed by drying the hard coat liquid on the lens substrate while or after the hard coat liquid flows due to its own weight, after the lens substrate is immersed in the hard coat liquid and then lifted.

When the hard coat liquid has relatively high volatility, drying is completed during the flow of the hard coat liquid due to its own weight after the lens substrate is immersed in the hard coat liquid and then lifted. On the other hand, when the hard coat liquid has relatively low volatility, drying is not completed during the flow of the hard coat liquid due to its own weight, and the hard coat liquid is dried again after lifting to form a hard coat film.

Specific examples (preferred examples) of various conditions of the lens substrate, the substrate protrusions, the hard coat liquid, and the dip method, as well as a method for measuring the stray light rate, will be described below.

### [Lens Substrate]

The aspects of the size of the substrate protrusions and the arrangement of the plurality of substrate protrusions on the surface of the lens substrate are not particularly limited and can be determined, for example, from the viewpoint of the visibility of the substrate protrusions from the outside, the impartation of design characteristics by the substrate protrusions, the adjustment of power by the substrate protrusions, and the like. The height of the substrate protrusions may be, for example, 0.1 to 10 µm, and preferably 0.7 to 0.9 µm (corresponding to 3.5 to 4.5 D). In plan view (i.e., when viewed facing the substrate protrusions from the optical axis direction), the radius of curvature of the surfaces of the substrate protrusions may be, for example, 50 to 250 mmR. Furthermore, the distance between the adjacent substrate protrusions (the distance between the end of one substrate protrusion and the end of another substrate protrusion adjacent to this substrate protrusion) may be approximately the same as, for example, the value of the radius of the substrate protrusions. Furthermore, the plurality of substrate protrusions can be arranged approximately uniformly around, for example, the lens center.

As the lens substrate, any of various lens substrates generally used in spectacle lenses can be used. The lens substrate may be, for example, a plastic lens substrate or a glass lens substrate. The glass lens substrate may be, for example, a lens substrate made of inorganic glass. The plastic lens substrate is preferable as the lens substrate because it is lightweight and less prone to breakage. Examples of the plastic lens substrate include styrene resins such as (meth)acrylic resins, polycarbonate resins, aryl resins, aryl carbonate resins such as diethylene glycol bisaryl carbonate resins (CR-39), vinyl resins, polyester resins, polyether resins, urethane resins obtained by reacting an isocyanate compound with a hydroxyl compound such as diethylene glycol, thiourethane resins obtained by reacting an isocyanate compound with a polythiol compound, and cured products obtained by curing a curable composition containing a (thio)epoxy compound having one or more disulfide bonds in the molecule (generally referred to as transparent resins). The curable composition may also be referred to as a polymerizable composition. As the lens substrate, an undyed substrate (colorless lens) or a dyed substrate (dyed lens) may be used. The thickness and diameter of the lens substrate are not particularly limited. However, for example, the thickness (central thickness) may be approximately 1 to 30 mm, and the diameter may be approximately 50 to 100 mm. The refractive index of the lens substrate may be, for example, approximately 1.60 to 1.75. However, the refractive index of the lens substrate is not limited to this range, and may be within or outside this range. In the present invention and this specification, the refractive index refers to the refractive index with respect to light having a wavelength of 500 nm. The lens substrate can be molded by a known molding method such as cast polymerization. For example, the lens substrate having the substrate protrusions on at least one surface can be obtained by molding the lens substrate through cast polymerization using a die having a molding surface provided with a plurality of concave portions.

### [Hard Coat Film]

One aspect of the hard coat film formed on the surface of the lens substrate having the substrate protrusions is a hard coat film formed by curing a curable composition (the hard coat liquid described before) containing a curable compound. Such a hard coat film contributes to an improvement in the durability of the spectacle lens. The curable compound refers to a compound having a curable functional group, and the curable composition refers to a composition containing one or more types of curable compounds.

One aspect of the curable composition (hard coat liquid) for forming the hard coat film can be a curable composition containing an organic silicon compound as the curable compound, and can also be a curable composition containing metal oxide particles together with the organic silicon compound. An example of the curable composition capable of forming the hard coat film is the curable composition described in Japanese Patent Application Publication No. S63-10640.

Furthermore, one aspect of the organic silicon compound can be an organosilicon compound represented by the following general Formula (I) or a hydrolyzate thereof.

(R¹)ₐ(R³)_{b}Si(OR²)_{4-(a+b)} ... (I)

In general Formula (I), R¹ represents an organic group having a glycidoxy group, an epoxy group, a vinyl group, a methacryloxy group, an acryloxy group, a mercapto group, an amino group, a phenyl group, or the like, R² represents an alkyl group having 1 to 4 carbon atoms, an acyl group having 1 to 4 carbon atoms, or an aryl group having 6 to 10 carbon atoms, R³ represents an alkyl group having 1 to 6 carbon atoms or an aryl group having 6 to 10 carbon atoms, and a and b each represent 0 or 1.

The alkyl group having 1 to 4 carbon atoms represented by R² is a linear or branched alkyl group, and specific examples thereof include a methyl group, an ethyl group, a propyl group, and a butyl group, and the like.

Examples of the acyl group having 1 to 4 carbon atoms represented by R² include an acetyl group, a propionyl group, an oleyl group, a benzoyl group, and the like.

Examples of the aryl group having 6 to 10 carbon atoms represented by R² include a phenyl group, a xylyl group, a tolyl group, and the like.

The alkyl group having 1 to 6 carbon atoms represented by R³ is a linear or branched alkyl group, and specific examples thereof include a methyl group, an ethyl group, a propyl group, a butyl group, a pentyl group, a hexyl group, and the like.

Examples of the aryl group having 6 to 10 carbon atoms represented by R³ include a phenyl group, a xylyl group, a tolyl group, and the like.

Specific examples of the compounds represented by general Formula (I) include the compounds described in paragraph [0073] of Japanese Patent Application Publication No. 2007-077327. Because the organic silicon compound represented by general Formula (I) has a curable group, the hard coat film can be formed by subjecting it to curing treatment after application.

Metal oxide particles can contribute to the adjustment of the refractive index and an improvement in the hardness of the hard coat film. Specific examples of the metal oxide particles include particles of tungsten oxide (WO₃), zinc oxide (ZnO), silicon oxide (SiO₂), aluminum oxide (Al₂O₃), titanium oxide (TiO₂), zirconium oxide (ZrO₂), tin oxide (SnO₂), beryllium oxide (BeO), antimony oxide (Sb₂O₅), and the like, and the metal oxide particles can be used alone or in combination of two or more. From the viewpoint of achieving both scratch resistance and optical properties of the hard coat film, the particle size of the metal oxide particles is preferably in the range of 5 nm to 30 nm. The content of the metal oxide particles in the curable composition can be appropriately set in consideration of the refractive index and hardness of the hard coat film to be formed, and may be generally approximately 5% by mass to 80% by mass based on the solid content of the curable composition. Furthermore, the metal oxide particles are preferably colloidal particles from the viewpoint of dispersibility in the hard coat film.

### [Dip Method]

The hard coat film can be formed by the following method. For example, a curable composition prepared by mixing components and, if necessary, optional components such as an organic solvent, a surfactant (leveling agent), or a curing agent is applied by immersion onto the surface of the lens substrate having the substrate protrusions, or applied by immersion via other films to form a coating film. This coating film is then subjected to curing treatment (for example, heating and/or light irradiation) according to the type of the curable compound. For example, when the curing treatment is performed by evaporation, the curing reaction of the curable compound in the coating film may be accelerated by placing the lens substrate, on which the coating film of the curable composition has been formed, under an atmospheric temperature of 50°C to 150°C for approximately 30 minutes to 3 hours in a tilted position, provided that the curable composition has fluidity. Note that drying treatment may also be performed together with this curing reaction.

The viscosity of the curable composition for forming the hard coat film on the surface of the lens substrate having the substrate protrusions can be appropriately set, but it is preferably in the range of 1 to 50 mPa·s, more preferably in the range of 1 to 40 mPa·s, and still more preferably in the range of 1 to 20 mPa·s. In the present invention and this specification, the viscosity refers to the viscosity at a liquid temperature of 25°C.

The temperature of the curable composition is preferably 0°C to 30°C when the lens substrate is immersed.

The boiling point of the solvent constituting the curable composition is preferably 30°C to 200°C and more preferably 60°C to 120°C when the lens substrate is immersed. The type of the solvent is not limited. For example, methanol, toluene, or the like may be used.

The concentration of the curable composition is preferably 1 to 50 wt% when the lens substrate is immersed.

The immersion time is preferably 1 to 300 seconds when the lens substrate is immersed.

The lifting speed of the curable composition is preferably 10 to 400 mm/min when the lens substrate is immersed. Note that the lifting speed may be constant (for example, within a variation width of ± 10% from the start to the end of lifting, the same applies hereinafter), or may be varied. For example, the lifting speed during the lifting step may be changed such that the difference in the average film thickness of the hard coat film between the central clear region and the outer clear region is within 10%.

Note that if the lifting speed is moderately low and constant, the hard coat liquid in the central clear region and the outer clear region is pulled down by its own weight, or, when the viscosity of the hard coat liquid is high, by the own weight in the tank. On the other hand, a nearly constant amount of the hard coat liquid remains in both the central clear region and the outer clear region due to the surface tension of the lens substrate. As a result, as will be described in the section of the embodiment given later, the difference in the average film thickness of the hard coat film between the central clear region and the outer clear region is nearly eliminated.

Furthermore, one aspect of the coating film formed on the surface of the lens substrate having the substrate protrusions can be a coating film, which is generally referred to as a primer film and contributes to an improvement in adhesion between layers. As a hard coat liquid that is capable of forming such a coating film, a composition (hereinafter referred to as a "drying-solidifiable composition") in which a resin component such as a polyurethane resin is dispersed in a solvent (water, an organic solvent, or a mixed solvent thereof) may be used. Such a composition proceeds to solidify when the solvent is dried and removed. Drying can be performed by drying treatment such as air drying or heat drying. Note that a curing reaction may also be performed together with this drying treatment.

The drying method after lifting is preferably heat drying. Furthermore, the drying temperature after lifting is preferably 20°C to 130°C. Furthermore, the drying time after lifting is preferably 0 to 90 minutes. A drying time of 0 minutes means the drying of the hard coat liquid during flow, and means that the hard coat liquid solidifies due to the volatilization of the solvent without intentionally performing a drying step, thereby forming the hard coat film.

### <Modified Examples, Etc.>

One aspect of the present invention has been described above. However, the disclosure described above merely illustrates the one exemplary aspect of the present invention. In other words, the technical scope of the present invention is not limited to the one exemplary aspect described above and may be modified in various ways without departing from the gist of the present invention. Furthermore, the disclosure described above may be arbitrarily selected and combined with the following modified examples.

### [Embodiment]

Hereinafter, the present invention will be specifically described using an embodiment, but the following embodiment is not intended to limit the present invention.

### <First Embodiment>

The following lens substrate was prepared. Note that no other material was laminated on the lens substrate. The prescription power S (spherical power) was set to 0.00 D, and the C (cylindrical power) was set to 0.00 D. This lens substrate is an uncut lens and has a regular circular shape in plan view, and the lens center is the center of the regular circle. This center is also be referred to as the eye point EP in the section of the embodiment.
Diameter of lens substrate in plan view: 100 mm
Type of lens substrate: PC (polycarbonate)
Refractive index of lens substrate: 1.589
Base curve of lens substrate: 3.00 D
Forming surface of substrate protrusions: object-side surface
Defocus power of substrate protrusions in design: 3.50 D
Shape of substrate protrusions in plan view: regular circle (having a diameter of 1 mm)
Height of substrate protrusions from substrate base portion: 0.8 µm
Arrangement of substrate protrusions in plan view: each substrate protrusion is discretely and independently arranged such that its center is positioned at a vertex of an equilateral triangle (the center of each substrate protrusion is arranged at a vertex of a honeycomb structure).
Pitch between substrate protrusions (distance between centers of substrate protrusions): 1.5 mm

In this embodiment, the range of the central clear region 2 was set to a region within a circle having a radius of 3.50 mm from the eye point EP, and the range of the functional region 3 was set to be within a circle having a radius of 12.50 mm from the lens center (excluding the central clear region 2). Note that the outer clear region 4 was provided on the side closer to the outer edge of the spectacle lens 1 than the functional region 3. The entire region between the outer edge of the spectacle lens 1 and the functional region 3 was set as the outer clear region 4 (the same applies to each example below).

The hard coat film was formed on both surfaces (the entire upper and lower surfaces) of the lens substrate by the dip method. The immersion direction and the lifting direction were set to be vertical. However, in this embodiment, as described in one aspect of the present invention, the lens substrate was inverted (the lower side of the spectacle lens, that is, the lower side of the lens substrate was directed upward in the up-down direction) when the lens substrate was arranged in a lens holder immersed together with the lens substrate during the immersion step.

The conditions of the hard coat liquid and the dip method are as follows.
Type of hard coat liquid: heat-curable coating agent
Temperature of hard coat liquid: 10°C
Viscosity of hard coat liquid: 10 mPa s
Boiling point of solvent (methanol) of hard coat liquid: 64.7°C
Immersion time: 3 minutes
Lifting speed: 1.4 mm/sec
Drying method after lifting: heating
Drying temperature after lifting: 110°C
Drying time after lifting: 90 minutes

On the basis of the above, the spectacle lens was obtained through the drying step. In this spectacle lens, the defocus power of the convex regions at specified positions was obtained. This defocus power was obtained using a known device employing a ray tracking method. The results are shown on the left vertical axis (unit: D (diopter)) of the graph in Fig. 4.

In Fig. 4, the horizontal axis indicates the positions on the vertical line passing through the lens center of the spectacle lens, when referring to the left vertical axis of the graph. In addition, "Up" indicates the convex region of the spectacle lens that corresponds to the substrate protrusion located at the uppermost portion in the up-down direction of the lens substrate during the immersion step. "Middle" indicates the convex region closest to the lower end of the central clear region. "Low" indicates the convex region of the spectacle lens that corresponds to the substrate protrusion of the lens substrate located at the lowermost portion in the up-down direction during the immersion step.

In this example, because the lens substrate is inverted, "Up" indicates the portion through which the line of sight passes during near vision, that is, the lower side of the spectacle lens, and "Low" indicates the upper side of the spectacle lens. "Middle" indicates the slightly upper side of the center of the spectacle lens.

With respect to the left vertical axis of the graph in Fig. 4, the defocus power in the portion indicated as "Up," that is, the lower side of the spectacle lens through which the line of sight passes during near vision increases by approximately 4% compared to other portions of the spectacle lens. Normally, when viewing an object at a distance of 30 cm, the apparent power in near vision decreases by approximately 4%. In this example, the apparent power during near vision can be compensated.

In addition to the defocus power of the convex regions at specified positions, the film thicknesses of the hard coat film in both the outer clear region and the central clear region of the spectacle lens were measured. The film thicknesses are obtained using a known device (for example, Talysurf CCI MP HS (manufactured by AMETEK Inc.)). The results are shown on the right vertical axis (unit: µm) of the graph in Fig. 4.

The horizontal axis of the graph in Fig. 4 indicates the positions in the vertical line passing through the lens center of the spectacle lens, when referring to the right vertical axis of the graph. In addition, "Up" indicates the position 5 mm above the substrate protrusion located at the uppermost portion in the up-down direction of the lens substrate during the immersion step. "Middle" indicates the lower end of the central clear region. "Low" indicates the position 5 mm below the substrate protrusion located at the lowermost portion in the up-down direction of the lens substrate during the immersion step.

With respect to the right vertical axis of the graph in Fig. 4, there is almost no change in the thickness of the hard coat film in the vertical direction. Specifically, the difference in the average film thickness of the hard coat film between the outer clear region and the central clear region is within 5%. Nevertheless, in this example, the defocus power was allowed to increase from the upper side to the lower side. As a result, the apparent power during near vision can be compensated.

### [Reference Signs List]

- 1: Spectacle lens
- 2: Central clear region
- 3: Functional region
- 3a: Convex region
- 3b: Base region
- 4: Outer clear region
- EP: Eye point

## Claims

1. A spectacle lens that achieves a myopia progression suppressing effect and includes a functional region having
a base region that causes a light flux incident from an object-side surface to be emitted from an eye-side surface and enter a wearer's pupil to achieve wearer's prescription power, and
a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region,
the spectacle lens comprising:
a lens substrate having a substrate base portion and a plurality of substrate protrusions protruding from the substrate base portion on a surface thereof; and
a hard coat film that forms the base region so as to cover the substrate base portion and forms the defocus region so as to cover the plurality of substrate protrusions by covering the lens substrate including the plurality of substrate protrusions,
wherein
a direction indicating portion that indicates a direction of the spectacle lens when worn is provided, and
defocus power of the convex regions tends to increase from an upper side to a lower side of the spectacle lens when worn.

2. The spectacle lens according to claim 1, wherein
the spectacle lens is an uncut lens before lens shaping.

3. The spectacle lens according to claim 1, wherein
defocus power of 80% or more of the convex regions in the spectacle lens is in a range of 3.0 to 5.0 D.

4. The spectacle lens according to claim 1, wherein
defocus power of 80% or more of the substrate protrusions in the lens substrate falls within a range of ± 0.12 D.

5. The spectacle lens according to claim 4, wherein
defocus power of the convex regions approaches the defocus power of the substrate protrusions underlying the convex regions from the upper side to the lower side of the spectacle lens when worn.

6. The spectacle lens according to claim 1, further comprising:
a central clear region that is surrounded by the functional region and includes an eye point, wherein
the central clear region causes a light flux incident from the object-side surface to be emitted from the eye-side surface, enter the wearer's pupil, and be focused on a retina to achieve the wearer's prescription power.

7. The spectacle lens according to claim 1, further comprising:
an outer clear region that serves as an annular region surrounding the functional region on an outer edge side of the spectacle lens, wherein
the outer clear region causes a light flux incident from the object-side surface to be emitted from the eye-side surface, enter the wearer's pupil, and be focused on a retina to achieve the wearer's prescription power.

8. The spectacle lens according to claim 1, further comprising:
a central clear region that is surrounded by the functional region and includes an eye point, the central clear region causing a light flux incident from the object-side surface to be emitted from the eye-side surface, enter the wearer's pupil, and be focused on the retina to achieve the wearer's prescription power;
an outer clear region that serves as an annular region surrounding the functional region on an outer edge side of the spectacle lens, the outer clear region causing a light flux incident from the object-side surface to be emitted from the eye-side surface, enter the wearer's pupil, and be focused on a retina to achieve the wearer's prescription power,
wherein
a difference in average film thickness of the hard coat film between the central clear region and the outer clear region is within 10%.

9. Spectacles in which a spectacle lens is mounted in a frame, the spectacle lens achieving a myopia progression suppressing effect and including a functional region having
a base region that causes a light flux incident from an object-side surface to be emitted from an eye-side surface, enter a wearer's pupil, and be focused on a retina to achieve wearer's prescription power, and
a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region,
the spectacle lens including:
a lens substrate having a substrate base portion and a plurality of substrate protrusions protruding from the substrate base portion on a surface thereof; and
a hard coat film that forms the base region so as to cover the substrate base portion and forms the defocus region so as to cover the plurality of substrate protrusions by covering the lens substrate including the plurality of substrate protrusions,
wherein
defocus power of the convex regions increases from an upper side to a lower side of the spectacle lens when worn.

10. A method for producing a spectacle lens that achieves a myopia progression suppressing effect and includes a functional region having
a base region that causes a light flux incident from an object-side surface to be emitted from an eye-side surface, enter a wearer's pupil, and be focused on a retina to achieve wearer's prescription power, and
a defocus region composed of a plurality of convex regions that cause a light flux incident from the object-side surface to be emitted from the eye-side surface, while providing positive defocus power to focus a light flux incident on the wearer's pupil at a position in front of a light flux that has passed through the base region,
the method comprising:
an immersion step of immersing a lens substrate in a hard coat liquid, the lens substrate having a substrate base portion and a plurality of substrate protrusions protruding from the substrate base portion on a surface thereof;
a lifting step of lifting the lens substrate from the hard coat liquid; and
a drying step of obtaining a hard coat film that forms the base region so as to cover the substrate base portion and forms the defocus region so as to cover the plurality of substrate protrusions by covering the lens substrate including the plurality of substrate protrusions,
wherein
(1) the lens substrate of the spectacle lens when worn is immersed in the hard coat liquid from an upper side thereof prior to the immersion step, in a case in which the lens substrate includes a direction indicating portion that indicates a direction of the spectacle lens when worn, and
(2) a direction indicating portion setting step is performed prior to the immersion step, in which, in a case in which the lens substrate does not include the direction indicating portion that indicates the direction of the spectacle lens when worn, a side of the lens substrate that first comes into contact with the hard coat liquid is set as the upper side of the lens substrate, an opposite side is set as a lower side thereof, and the direction indicating portion that indicates the direction of the spectacle lens when worn is provided on the lens substrate or the spectacle lens in accordance with the setting.

11. The method for producing the spectacle lens according to claim 10, wherein,
in the lifting step, a lifting speed of the lens substrate is within a variation width of ± 10% from a start to an end of lifting.
